## Europäisches Patentamt
## European Patent Office
## Office européen des brevets

(19)

(11) Veröffentlichungsnummer: **0 234 355 B1**

(12)

# EUROPÄISCHE PATENTSCHRIFT

(45) Veröffentlichungstag der Patentschrift: **09.10.91**

(51) Int. Cl.5: **H04Q 11/04**, H04L 12/40

(21) Anmeldenummer: **87101540.0**

(22) Anmeldetag: **05.02.87**

(54) **Schaltungsanordnung für PCM-Fernmeldeanlagen, insbesondere PCM-Fernsprechvermittlungsanlagen, mit mehreren synchron pulstaktgesteuerten Sendern für gemeinsamen Sendekanal.**

(30) Priorität: **28.10.86 DE 3636698**
**24.02.86 DE 3605886**

(43) Veröffentlichungstag der Anmeldung:
**02.09.87 Patentblatt 87/36**

(45) Bekanntmachung des Hinweises auf die
Patenterteilung:
**09.10.91 Patentblatt 91/41**

(84) Benannte Vertragsstaaten:
**AT BE CH DE FR GB IT LI NL SE**

(56) Entgegenhaltungen:
EP-A- 0 051 794          EP-A- 0 060 517
EP-A- 0 110 015          EP-A- 0 124 858
EP-A- 0 183 998          DE-A- 3 248 446
GB-A- 2 157 923

IBM TECHNICAL DISCLOSURE BULLETIN,
Band 24, Nr. 2, Juli 1981, Seiten 912-913, New
York, US; L.M. PUSTER, Jr.: "Two-Bit bus
communication discipline with inherent
priority contention resolution"

(73) Patentinhaber: **SIEMENS AKTIENGESELL-
SCHAFT
Wittelsbacherplatz 2
W-8000 München 2(DE)**

(72) Erfinder: **Berner, Wolfgang, Dipl.-Ing
Alemannestrasse 20
W-8000 München 90(DE)**
Erfinder: **Grabenhorst, Rolf, Dipl.-Ing
Gräfstrasse 129
W-8000 München 60(DE)**
Erfinder: **Küffer, Peter, Dipl.-Ing
Noestrasse 28
W-8000 München71(DE)**
Erfinder: **Birlmeier, Josef, Dipl.-Ing
Josef-Weigl-Strasse 20
W-8024 Deisenhofen(DE)**
Erfinder: **Prey, Gerhard, Ing. (grad.)
Kiefernstrasse 24
W-8031 Eichenau(DE)**

PROCEEDINGS OF THE NATIONAL ELECTRO-
NICS CONFERENCE, Band 38, 24.-26. September 1984, Seiten 245-249, Rosemont, Illinois, US; S.R. AHUJA: "S/NET: A high speed
interconnect for multiple computers"

MINI-MICRO, CONFERENCE RECORD, Mai
1984, Paper 23/5, Seiten 1-10, New York, US;
R.L. MITCHELL: "Super serial systems"

## Beschreibung

In Fernmeldeanlagen tritt häufig das Problem auf, daß von mehreren dezentralen Einrichtungen, denen gemeinsam eine zentrale Einrichtung zur Zusammenarbeit zur Verfügung steht, zu dem Zeitpunkt jeweils nie mehr als eine mit der zentralen Einrichtung in Verbindung zu treten in der Lage sein darf. Hierfür sind in großer Vielfalt Auswahlschaltungen bekannt geworden in Form von Wählern, Relaiskettenschaltungen und entsprechenden elektronischen schaltungstechnischen Lösungen. Ferner ist in diesem Zusammenhang das selbstsperrende Prüfvielfach bekannt geworden. Die Erfindung bezieht sich auf eine Schaltungsanordnung für PCM-Fernmeldeanlagen, imsbesondere PCM-Fernsprechvermittlungsanlagen mit mehreren synchron pulstaktgesteuerten Sendern welche Informationen, die Adressen und Daten bilden und die aus einer Folge von Binärzeichen bestehen, abzugeben vermögen und in der die von den Sendern jeweils abgegebenen Daten über pulstaktgesteuerte Umsetzer, die einer Erneuerung der Binärzeichen dienen, zusammengeführt und auf einem allen Sendern gemeinsamen Sendekanal niederohmig ausgesendet werden und
in der die von den Sendern jeweils abgegebene Adresse auf dem Weg zu einem allen Sendern gemeinsamen Prüfkanal zusammenfließen, wobei die Schaltungsanordnung derart ausgebildet ist, daß, zur Unterbindung zweier oder mehrerer gleichzeitiger Sendevorgänge nach gleichzeitigen Starts zweier oder mehrerer verschiedener Sender,

a) jeder Sender zu Beginn eines jeden Sendevorganges seine eigene binärcodierte senderindividuelle Adresse abgibt,

b) von zwei oder mehreren Sendern gleichzeitig abgegebene Adressen auf dem Prüfkanal bitweise zusammenfließen,

c) bei Ungleichheit von von zwei oder mehr Sendern zeitlagegleich abgegebenen und auf dem Prüfkanal zusammenfließenden Binärzeichen sich immer das Zeichen der einen Art von den zwei möglichen Arten von Binärzeichen gegenüber den Zeichen der anderen Art durchsetzt,

d) die zusammenfließenden Binärzeichen wieder den Sendern zugeführt werden

e) jeder Sender die von ihm momentan abgebene Information mit der momentan zurückerhaltenen Information bitweise vergleicht und

f) jeder Sender dabei in dem Falle, daß das jeweils momentan zurückerhaltene Zeichen eines der einen Art, dagegen das von ihm selbst zeitlage-gleich abgegebene Zeichen das der anderen Art ist, seinen Sendevorgang abbricht und daß

die Aussendung der von einem jeweiligen Sender abzugebenden Daten auf den Sendekanal erst nach Durchsetzung der zugehörigen Adresse des betreffenden Senders auf dem Prüfkanal erfolgt.
Durch die im Rotbuch des CCITT gegebenen Empfehlungen ist eine Schaltungsanordnung bekannt, in der jeder Sender die Möglichkeit eines Zugriffes zum gemeinsamen Sendekanal hat, indem jeder Sender einen Sendevorgang über den gemeinsamen Sendekanal starten kann. Dabei muß verhindert sein, daß ein Sendevorgang seitens eines Senders gestartet wird, wenn bereits ein Sendevorgang seitens eines jeweils anderen Senders läuft. Dies läßt sich in an sich bekannter Weise dadurch gewährleisten, daß das jeweilige Stattfinden eines Sendevorganges sämtlichen Sendern signalisiert wird, von denen dadurch jeder daran gehindert ist, seinerseits einen Sendevorgang zu starten. Die spezielle Schwierigkeit in diesen Zusammenhängen besteht darin, ein gleichzeitiges Starten zweier Sendevorgänge zu erkennen und dementsprechend zu verhindern. Hierzu wird in Schaltungsanordnungen der angegebenen bekannten Art das auf den Sendekanal jeweils zur Aussendung kommende Binärzeichen rückwärts geleitet und wieder Sendern zugeführt, von denen jeder zur Zeit sendende Sender dieses momentan zurückerhaltene Binärsignal mit dem momentan tatsächlich von ihm selbst - das heißt also nur von ihm selbst - zur Aussendung gebrachten Binärzeichen vergleicht. Sobald ein Sender hierbei einen Unterschied zwischen dem momentan von ihm selbst abgegebenen Binärzeichen und dem momentan über den Sendekanal zur Aussendung kommenden Binärzeichen erkennt, bricht er noch während desselben Binärzeichens seinen Sendevorgang seinerseits ab. Dabei kann bis dahin auf dem Sendekanal noch keine Binärzeichen-Verfälschung eingetreten sein.

Um in einer Schaltungsanordnung der bekannten Art in diesem Zusammenhang eine Binärzeichen-Verfälschung mit Sicherheit zu unterbinden, ist es erforderlich, daß der zuvor erwähnte Abbruch des Sendevorganges desjenigen Senders, der den BinärzeichenUnterschied erkannt hat, also rechtzeitig erfolgt, daß eine Binärzeichen-Verfälschung bereits für das nächste Binärzeichen mit Sicherheit verhidert ist. Diese Rechtzeitigkeit des Abbruches eines von zwei zufällig gleichzeitig gestarteten Sendevorgängen ist ein der Erfindung zugrunde liegendes Problem.
Im Falle einer Schaltungsanordnung der angegebenen bekannten Art erfolgt also vor einer Inanspruchnahme des Sendekanals durch einen der mehreren Sender keine vorbereitende Auswahl eines einzigen von möglicherweise zwei oder mehreren von ihnen, die zugleich zum Starten eines Sendevorganges bereits sind. Eine solche Auswahl liegt vielmehr in einer besonderen Art und Weise des Beginnens eines jeden Sendevorganges selbst.

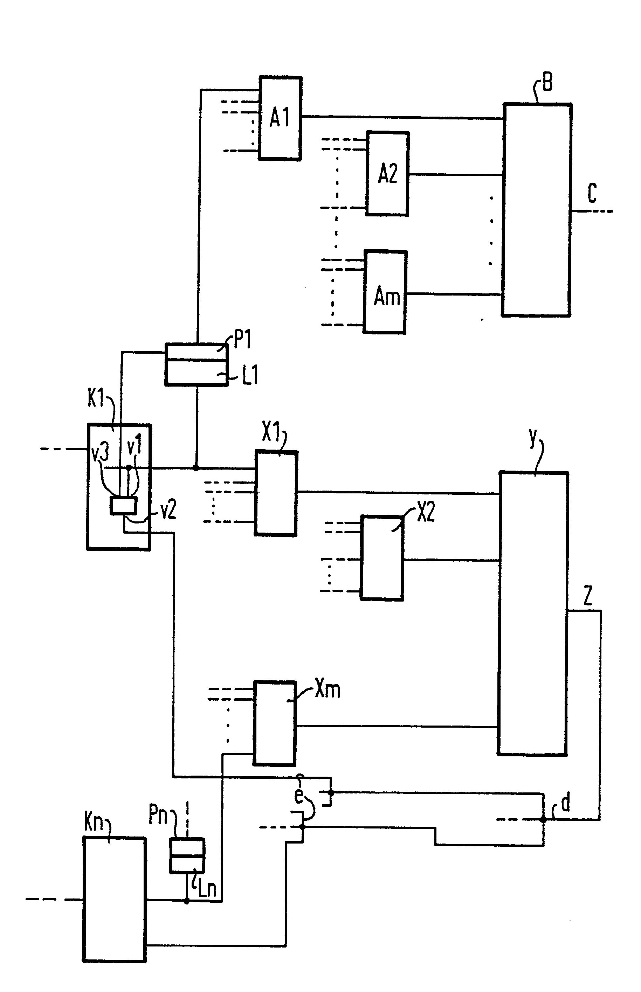

Einen Start eines Sendevorganges eines Senders zu verhindern, wenn bereits vorher ein anderer Sendevorgang eines anderen Senders zu laufen begonnen hat, ist - wie bereits erwähnt - noch relativ leicht zu realisieren. Dabei jedoch einen hinsichtlich der gemeinsamen Pulstaktsteuerung gleichzeitigen Start zweier Sendevorgänge nicht zu einer Verfälschung von über den gemeinsamen Sendekanal übertragenen Informationen werden zu lassen, dient die weiterhin bekannte Maßnahme, daß jeder Sender einen neuen Sendevorgang immer damit beginnt, daß er seine binärcodierte senderindividuelle Adresse zur Aussenung bringt. Unabhängig davon kann natürlich außerdem auch noch vorgesehen sein, daß ein Sender immer vor Sendebeginn überprüft, ob bereits ein Sendevorgang seitens eines anderen Senders stattfindet; jedoch ist mit einer solchen Überprüfung nicht der Fall eines zufällig gleichzeitigen Sendebeginnes erfaßbar. Dagegen wird aber durch die Aussendung der eigenen binärcodierten Adresse eines jeden Senders vor Beginn der Aussendung der eigentlichen Nachricht ermöglicht, ein pulstaktmäßig zufällig zeitgleiches Starten der Sendevorgänge zweier Sender mit Sicherheit zu verhindern und damit Informationsverfälschungen auszuschließen. Dabei dient zur Verhinderung einer Informationsverfälschung die oben angegebene Durchsetzung jeweils eines Zeichens der einen Art von zwei Binärzeichen gegenüber einem pulstaktmäßig zeitgleichen Zeichen der jeweils anderen Art, sowie der pro Sender und pro Zeichen durchgeführte Vergleich des von dem betreffenden Sender jeweils zur Aussendung abgegebenen Zeichens mit dem auf dem Sendekanal jeweils tatsächlich momentan herrschenden Zeichen. Haben nämlich zwei Sender pulstaktmäßig gleichzeitig zwei Sendevorgänge gestartet, so tritt bei der immer zuerst erfolgenden Aussendung der senderindividuellen binärcodierten Adresse mit Sicherheit wenigstens bei einem Bit der jeweils mehreren synchron abgegebenen Binärzeichen dieser Adressen zwangsläufig eine Zeichenungleichheit bezüglich des von ihm abgegebenen Binärzeichens einerseits und des auf dem Sendekanal momentan herrschenden Binärzeichenzustandes andererseits auf. Diese Zeichenungleichheit wird durch den Vergleich seitens desjenigen Senders (und nur durch diesen, nicht also durch den anderend Sender!) erkannt, der bei dem betreffenden Bit selbst das Zeichen der genannten anderen Art, also das gegenüber dem Zeichen der genannten einen Art unterlegene, das heißt sich nicht durchsetzende Binärzeichen sendet. Dieser die Zeichenungleichheit erkennende Sender bricht sofort seinen Sendevorgang ab, wohingegen der andere Sender seinen Sendevorgang fortsetzt, ohne überhaupt diese vorübergehende Senderparallelität bemerkt zu haben, und ohne daß eine Zeichenverfälschung bei dem von ihm abgegebenen Binärzeichen bereits eingetreten ist. Allerdings muß dieser Abbruch des Sendevorganges seitens des betreffenden Senders noch vor Beginn des nächstfolgenden Binärzeichens stattgefunden haben, damit nicht etwa dieses von einer Zeichenverfälschung während eines der nachfolgenden Pulstakte betroffen wird. Dies ist das oben bereits angesprochene Problem der Rechtzeitigkeit. Das in dem zuvor erläuterten Zusammenhang unter anderem verwendete Prinzip der einseitigen Zeichendurchsetzung setzt eine Verwendung von geeigneten Gatterschaltungen mit ODER-Bedingung voraus. In bekannten Schaltungsanordnungen der oben in ihren maßgeblichen Wesensmerkmalen angegebenen Art sind ODER-Schaltungen verwendet, wie sie zum Beispiel in der Nachrichtentechnischen Zeitschrift 1957, Heft 6, Seite 251, in Bild 9 und in dem Fachbuch "Das TTL-Kochbuch", herausgegeben von Texas Instruments Deutschland GmbH, Applicationslabor, 805 Freising, Ausgabe TM 650/1172, 1. Auflage (Nov.1972) Seiten 116, 306 und 317 ("OPEN COLLECTOR") dargestellt sind. Ausgangsseitig geben sie eines der beiden möglichen Binärzeichen relativ niederohmig, d.h. nicht über einen Vorwiderstand oder über einen solchen mit einem relativ niedrigen Widerstandswert, ab. Das andere der beiden möglichen Binärzeichen geben sie dagegen über einen Widerstand ab, dessen Widerstandswert im Hinblick auf eine Abgabe des erstgenannten möglichen Binärzeichens in bekannter Weise groß genug dimensioniert sein muß. Dies bedeutet jedoch für eine Abgabe des genannten anderen Binärzeichens, daß es hierbei über diesen Widerstand abgegeben wird, wohingegen das erstgenannte Binärzeichen demgegenüber ja relativ niederohmig abgegeben wird. Dies wiederum hat zur Folge, daß insbesondere kapazitive Leitungseinflüsse des Sendekanals sowie von zu diesem führende Signalwege einseitige Verzögerungen in der Zeichenweitergabe und damit von Verzerrungen und damit die Gefahr von Zeichenverfälschungen zur Folge haben, wobei die Binärzeichen der einen Art und die der anderen Art unterschiedlich von diesen Verzögerungen betroffen werden, was den Verfälschungseffekt noch erhöht.

Darüber hinaus ergeben sich bei einer Anordnung der bekannten Art weitere technische Probleme, wenn in der weiter oben sehr eingehend betrachteten Weise zwei (oder sogar mehr als zwei) Sendevorgänge zufällig zweitlagegleich beginnen. Fließen ein Binärzeichen der einen Art und mehrere Binärzeichen der anderen Art auf dem Sendekanal zusammen, wobei ja das eine einzige erstere sich gegen die mehreren letzteren durchsetzen soll, so kann das eine Binärzeichen der einen Art durch die mehreren Binärzeichen der anderen Art hinsichtlich seiner Amplitude und/oder Impulsform so beeinträchtigt werden, daß eine Zeichenverfälschung zustandekommt, die zu einem Übermittlungsfehler führt.

Werden zur Realisierung des eingangs unter d) angegebenen Durchsetzungsprinzips in der bekannten Weise Gatterschaltungen der bekannten Art verwendet, so führt das also zu Problemen der Übertragungsgeschwindigkeit bzw. der Sicherheit bezüglich der Richtigkeit der übertragenen Binärzeichen. Zugleich aber resultiert aus dem weiter oben angesprochenen Problem der Rechtzeitigkeit hinsichtlich eines eventuellen Abbruches eines Sendevorganges die Forderung, daß zwei zweitgleiche, zusammengeflossene Binärzeichen gegebenenfalls unterschiedlichen Zeicheninhaltes schnell genug den Weg von den betreffenden beiden Sendern zum Sendekanal und von hier wieder zurück zu den Sendern zurücklegen müssen, damit in einem derselben der Sendevorgang so abgebrochen wird, daß keine Zeichenverfälschung eintritt.

Aus der EP-0 051 794 ist eine Schaltungsanordnung bekannt, bei der eine Mehrzahl von synchron pulstaktgesteuerten Verarbeitungseinheiten über ein aus einem Prüfkanal und einem Sendekanal bestehenden Netzwerk verbunden sind, über das die Verarbeitungseinheiten durch wahlfreien Zugriff untereinander Informationen jeweils unterschiedlicher Länge austauschen können. Zur Vermeidung von Kollisionen auf dem Sendekanal sendet jede Verarbeitungseinheit vor jedem Sendevorgang immer zuerst seine individuelle Adresse auf dem Prüfkanal aus und stellt durch bitweisen Vergleich der von ihr ausgesendeten mit der von ihr vom Prüfkanal empfangenen Adresse fest, ob sich ihre Adresse auf dem Prüfkanal durchgesetzt hat. Erbringt der Vergleich einen Unterschied, so tritt die betroffene Verarbeitungseinheit unverzüglich von ihrem Sendeversuch zurück. Hat der Vergleich jedoch erbracht, daß die auf dem Prüfkanal aufgetretene Adresse mit der von der jeweiligen Verarbeitungseinheit abgegebene Adresse übereinstimmt, so sendet die betreffende Verarbeitungseinheit die Nutzinformation mit einer Verzögerung um eine Zeitspanne auf den Sendekanal, die größer als die zur Adressen-Übertragung benötigte Zeitspanne ist. Versucht man diese bekannte Schaltungsanordnung in Fernmeldeanlagen einzusetzen, so macht es sich nachteilig bemerkbar, daß zur Übertragung von Information zu einem entfernten Empfänger zwei Leitungen, nämlich eine Prüfkanalleitung zur Übertragung von Adresseninformationen und eine Sendekanalleitung zur Übertragung von Dateninformationen, notwendig sind, wobei die erhöhte kapazitive Belastung durch eine entsprechend längere Prüfkanalleitung zusammen mit dem auf dem Prüfkanal verwendeten Prinzip der Open-Collector-Verknüpfung zu einer Reduzierung der Übertragungsgeschwindigkeit führt. Auch die Verzögerung zwischen der Adresseninformation und den Daten um mehr als eine Zeitspanne, die zur Übertragung einer vollständigen Adresse benötigt wird, stehen der bei Fernmeldeanlagen angestrebten weitmöglichst verzögerungsfreien Übertragung von Informationen entgegen. Aus der DE-OS 32 48 446 ist ein Verfahren bekannt, bei dem eine Vielzahl von synchron pulstaktgesteuerten Sendern jeweils über einen Open-Collector-Ausgang Zugriff auf einen über einen Vorwiderstand mit einer Betriebsspannungsquelle verbundenen Sendekanal haben. Zu Beginn eines Sendevorganges sendet jeder Sender auf einem sämtlichen Sendern gemeinsamen Prüfkanal ein Anforderungssignal aus, um bei Vorhandensein eines solchen mit der Aussendung seiner senderindividuellen Adresse auf den Sendekanal zu beginnen, wobei er einen bitweisen Vergleich der von ihm ausgesendeten Adresse mit der auf dem Sendekanal anliegenden Information durchführt und nur für den Fall, daß sich seine eigene Adresse vollständig auf dem Sendekanal durchgesetzt hat, mit der Aussendung von Daten beginnt. Die durch diese Schrift gegebene Lehre geht in dem hier interessierenden Zusammenhang nicht über das weiter oben Erwähnte bezüglich der Zeichendurchsetzung auf dem Sendekanal hinaus, wobei das auf dem Sendekanal mit Hilfe von Open-Collector- Ausgängen realisierte Durchsetzungsprinzip insbesondere bei langen und damit zunehmend kapazitätsbehafteten Leitungen der Übertragungsqualität und der Übertragungsgeschwindigkeit aus den oben bereits näher dargelegten Gründen entgegensteht.

Die Erfindung stellt sich die Aufgabe, eine aufwandarme Realisierung für eine Schaltungsanordnung der eingangs genannten Art anzugeben, bei der zur Erzielung einer hohen Übertragungsgeschwindigkeit bei gleichzeitig hoher Übertragungsqualität Binärzeichen beiderlei Art relativ niederohmig über eine einzige Leitung zu einem entfernten Empfänger übertragen werden und bei der durch die Schaltungsanordnung bedingte Laufzeitverzögerungen von Binärzeichen weitgehend vermieden sind und bei der Kollisionen von Binärzeichen auf dem Sendekanal bei gleichzeitigem Start mehrerer Sender mit Sicherheit verhindert sind.

Die Erfindung löst die gestellte Aufgabe dadurch, daß im gemeinsamen Sendekanal Binärzeichen die sowohl Daten als auch Adressen darstellen niederohmig zusammengeführt werden und daß die von den Sendern abgegebenen Binärzeichen zwischen jeweils zwei Taktimpulsen auf dem Prüfkanal nach dem Durchsetzungsprinzip zusammengeführt und von diesem dann wieder zu den Sendern zugeführt werden und daß die Aussendung von Binärzeichen auf den Sendekanal um eine senderindividuelle Verzögerung von wenigstens einem Takt erfolgt, so daß bei pulstaktmäßig gleichzeitigem Start zweier Adressen-Sendevor-gänge und bei Auftreten von Zeichenungleichheit eine die Sender gefährdende Belastung sowie eine Bitverfälschung mittels eines der Aussendung dieser ungleichen Zeichen zuvorkommenden ebenfalls senderindividuellen Abbrechens der Übertragung zum Sendekanal verhindert ist.

Die erfindungsgemäße Schaltungsanordnung bringt neben dem Vorteil, daß die Aussendung von Adressen und Daten über Umsetzer auf eine einzige Leitung zu einem entfernten Empfänger relativ niederohmig erfolgen kann, wobei eine für beiderlei Art von Binärzeichen gleichgute Übertragungsqualität selbst bei hohen Übertragungsgeschwindigkeiten erzielt wird, den weiteren Vorteil mit sich, daß die minimale Verzögerung zwischen der Abgabe von Binärzeichen von einem jeweiligen Sender und der Übertragung auf dem Sendekanal nur eine Taktperiode beträgt, wodurch Laufzeitverzögerungen, die zum Auftreten des an sich unerwünschten Jitters beitragen, weitgehend vermieden sind. Die erfindungsgemäße Verzögerung der Übertragung um wenigstens einen Takt kann durch aufwandarme, technisch einfache und dem Fachmann geläufige Verzögerungseinrichtungen wie z.B. Flip-Flops erreicht werden.

Im Zuge des Weges von Sendern zum Sendekanal einerseits sind die für die Aussendungsvorgänge erforderlichen Umsetzer angeordnet, während andererseits im Zuge des Weges von den Sendern zum Prüfkanal ODER-Schaltungen verwendet werden können, die bei im Vergleich zum Sendekanal relativ geringen Ausgangsleistungen entsprechend kurze Schaltzeiten aufweisen. Die Aufteilung der Funktionen für das Senden einerseits und für das Überwachen auf Senderparallelität sowie für einen Abruch eines Sendevorganges andererseits schafft die Voraussetzung für eine jeweils zweckentsprechende unterschiedliche Schaltkreisgestaltung in den Wegen zum Sendekanal einerseits und in denen zum Prüfkanal andererseits.

Die Erfindung schafft die Möglichkeit, beim Prüfkanal ODER-Schaltungen der gemäß dem genannten Bild 9 bekannten ARt oder ähnlicher Art, also im Aufbau sehr einfacher Art zu verwenden, wobei diese ODER-Schaltungen die von der Erfindung vorausgesetzte Be-Bedingung erfüllen, daß sich Binärzeichen der genannten einen Art gegenüber den Binärzeichen der genannten anderen Art in der angegebenen Weise elektrisch und zeichenmäßig durchsetzen, wenn Binärzeichen beiderlei Art wie angegeben zusammentreffen. Erfindungsgemäß können dagegen solche ODER-Schaltungen beim Sendekanal eingesetzt werden, die alternativ jedes der beiden möglichen Binärsignale - also zu jeweils einem Zeitpunkt entweder das eine oder das andere dieser Binärsignale - relativ niederohmig abzugeben ermöglichen, und die ein Zusammentreffen unterschiedlicher Binärsignale bereits aufgrund ihres inneren schaltungstechnischen Aufbaues vonvornherein ausschließen. Im Zusammenhang der Erfindung kann also vorgesehen werden, daß auf dem Sendekanal überhaupt keine Binärzeichen unterschiedlicher Art zusammenfließen können. Damit lassen sich die Übertragungsbedingungen noch wesentlich verbessern und es kann das in bekannten Schaltungsanordnungen auch beim Sendekanal angewendete, weiter oben angesprochene Prinzip der Zeichendurchsetzung eines Binärzeichens der einen Art gegenüber einem oder mehreren Binärzeichen der anderen Art deshalb vonvornherein nicht gefährdet und eine Gefahr der Zeichenverfälschung bei gleichzeitigem Auftreten einer Mehrzahl von Binärzeichen der anderen Art gegenüber einem einzigen Binärzeichen der einen Art deshalb vonvornherein nicht heraufbeschworen werden, weil dieses Prinzip der Zeichendurchsetzung auf dem Sendekanal eliminiert ist. Damit ist hier auch die Gefahr einer dadurch bedingten Zeichenverfälschung von vornherein ausgeklammert.

Gemäß einer Weiterbildung der Erfindung ist vorgesehen, daß durch eine senderindividuelle Verzögerung der genannten Aussendung um wenigstens einen Takt eine bei pulstaktmäßig gleichzeitigem Start zweier Sendevorgänge und bei Auftreten von Zeichenungleichheit die Sender gefährdende Überlastung dabei mittels eines der Aussendung dieser ungleichen Zeichen zuvorkommenden ebenfalls senderindividuellen Abbrechens der Übertragung zum Sendekanal verhindert ist.

Die Erfindung schafft die Möglichkeit, beim Prüfkanal ODER-Schaltungen der gemäß dem genannten Bild 9 bekannten Art oder ähnlicher Art, also im Aufbau sehr einfacher Art zu verwenden, wobei diese ODER-Schaltungen die von der Erfindung vorausgesetzte Bedingung erfüllen, daß sich Binärzeichen der genannten einen Art gegenüber den Binärzeichen der genannten anderen Art in der angegebenen Weise elektrisch und zeichenmäßig durchsetzen, wenn Binärzeichen beiderlei Art wie angegeben zusammentreffen. Erfindungsgemäß können dagegen solche ODER-Schaltungen beim Sendekanal eingesetzt werden, die alternativ jedes der beiden möglichen Binärsignale relativ niederohmig abzugeben ermöglichen. Dadurch sind im Hinblick auf die Zeichenzusammenführung auf dem Prüfkanal die Zeitbedingungen wesentlich entschärft. Diese Zeichenzusammenführung auf dem Prüfkanal nach dem für den Sendekanal bekannten Prinzip (bekannt entsprechend der betreffenden, oben erwähnten Schaltungsanordnung) verursacht ja hier einen durch dieses Prinzip in bekannter Weise bedingten höheren Zeitbedarf. Dieser aber wird durch die angegebene Weiterbildung der Erfindung erfüllt, indem die Verzögerung der Aussendung um wenigstens einen Takt, zum Beispiel also auch um zwei Takte, die Möglichkeit gewährleistet, daß für das notwendigenfalls vorzunehmende Abbrechen des Übertragungsvorganges zum Sendekanal die erforderliche Zeit zur Verfügung steht. Ist also aufgrund des auf dem Prüfkanal angewendeten Prinzips der Zeichendurchsetzung, das ja auf dem Sendekanal erfindungsgemäß eliminiert ist, die Gewinnung des gegebenenfalls für einen rechtzeitigen Abbruch der Übertragung der Binärzeichen zum Sendekanal verantwortlichen Ergebnisses des Vergleiches verzögert, so wird durch die Erfindung dennoch sichergestellt, daß ein solcher notwendig werdender Abbruch so rechtzeitig erfolgt, daß ein Zusammentreffen von Binärzeichen ungleicher Art auf dem Sendekanal mit seinen negativen Folgen mit Sicherheit verhindert ist.

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Es ist eine Mehrzahl von n Sendern K1 bis Kn vorgesehen, die in bekannter und deshalb nicht im einzelnen dargestellter bzw. beschriebener Weise (vgl. DE-A- 3 11 10 22) snychron pulstaktgesteuert sind. Sie sind zur Aussendung von binärcodierten Informationen eingerichtet. Sie haben gleichzeitig Zugang zu einem gemeinsamen Sendekanal C. Jedoch ist vorgesehen, daß eine Aussendung von binärcodierten Informationen über den Sendekanal gleichzeitig immer nur von einem einzigen der Sender erfolgt.

Die in der Zeichnung dargestellte Einrichtung möge Bestandteil eines digitalen Konzentrators ("Digital Line Unit DLU") sein. Dabei möge der Sendekanal C ein einer Mehrzahl von weiteren, nicht dargestellten Kanälen gemeinsamer zentraler Zeichenkanal sein, über den sämtliche der Verbindungsherstellung, der Verbindungsaufrechterhaltung und der Verbindungsauslösung dienende Informationen übertragen werden. In der Zeitschrift "telcom report", Nr. 4 von 1982 (englischsprachige Ausgabe) ist das Prinzip eines digitalen Konzentrators dargestellt und beschrieben. Er kann mehrere Konzentrationsstufen aufweisen. Aus der Zeichnung ist ersichtlich, daß Einrichtungen A1 bis Am einer ersten Konzentrationsstufe angehören, während eine Einrichtung B einer zweiten Konzentrationsstufe angehört.

Solche Einrichtungen sind in der Zeitschrift "telcom report" No. 4 (1982), Seite 262 ff der englischsprachigen Ausgabe beschrieben. Die Einrichtungen A1 bis Am können Mehrfachteilnehmeranschlußschaltungen (SLM) mit je einem Modulprozessor (SLMCP) sein, während die Einrichtung B einen Konzentratorprozessor (DICC + DIU) darstellt. In diesem Zusammenhang sei auch auf die DE-A- 35 12 846 hingewiesen.- Bei dem hier beschriebenen Ausführungsbeispiel können ebenso auch mehr als zwei Konzentrationsstufen vorgesehen sein. In den Konzentrationsstufen befinden sich unter anderem Gatterschaltungen, die die logische ODER-Bedingung erfüllen. Hierbei handelt es sich um ODER-Schaltungen, die jedes der beiden jeweils möglichen Binärsignale relativ niederohmig abzugeben in der Lage sind.

Die Sender K1 bis Kn sind außer mit dem gemeinsamen Sendekanal C mit einem gemeinsamen Prüfkanal Z verbunden. Sie führen ihre binärcodierten Informationen jeweils zugleich dem gemeinsamen Sendekanal C und dem gemeinsamen Prüfkanal Z über Konzentrationsstufen X1 bis Xm und Y zu, die hinsichtlich ihrer äußeren Zusammenschaltung den Konzentrationsstufen A1 - Am und B entsprechen. Die Sender erhalten immer die auf und über den Prüfkanal übertragenen Informationen zurück und führen mit Hilfe eines pro Sender, zum Beispiel K1, vorgesehenen Vergleichers einen Vergleich durch, durch den die dem Sendekanal insgesamt zur Aussendung jeweils momentan zugeführte Information mit der von dem betreffenden Sender jeweils abgegebenen Information auf Zeichengleichheit bzw. Zeichenungleichheit Bit für Bit überprüft wird. Dieser Vergleich erfolgt entsprechend dem taktgesteuerten Ablauf des Sendevorganges also einzeln pro Binärzeichen der Information, das heißt jedes dem Sendekanal C zur Aussendung zugeführte (über L1/P1/A ..., B) Binärsignal wird mit dem ihm jeweils entsprechenden Binärsignal verglichen, das der betreffende Sender über den Prüfkanal Z und den Signalweg e zurükkerhält.

Für den Fall, daß einer der Sender, zum Beispiel K1, zum Start eines Sendevorganges bereit ist, und daß bereits ein Sendevorgang seitens eines anderen Senders, zum Beispiel Kn, abläuft, vermag der betreffende Sender, zum Beispiel K1, dies in für den Fachmann geläufiger Weise zu erkennen, zum Beispiel anhand der dabei über den Prüfkanal Z zurückerhaltenen Informationen. Schwieriger ist es jedoch, einen pulstaktgleichen Start seitens zweier Sender zu erkennen und zu verhindern. Zur Erkennung eines solchen gleichzeitigen Starts zweier Sendevorgänge zweier verschiedener Sender zwecks Abbruches eines dieser beiden Sendevorgänge ist nun vorgesehen, daß jeder von ihnen zuerst immer am Anfang eines Sendevorganges als Information seine eigene binärcodierte Adresse zum gemeinsamen Sendekanal hin überträgt. Da ferner vorgesehen ist, daß jeder Sender die jeweils von ihm zur Aussendung über den Sendekanal C abgegebene Information außerdem auch zum Prüfkanal Z hin überträgt, laufen im Falle einer gleichzeitig, jedoch voneinander unabhängig gestarteten Aussendung zweier Informationen deren Binärsignale auf dem Prüfkanal Z zusammen, und zwar in der Konzentrationsstufe Y oder bereits in einer der Konzentrationsstufen X1 bis XM.

Bekanntlich kann bei binärcodierter Informationsübertragung jedes Binärzeichen einer binärcodierten Information jeweils eine von zwei Wertigkeiten aufweisen. Jedes Binärzeichen kann also ein Zeichen einer ersten Art oder ein Zeichen einer zweiten Art sein. In den den Konzentrationsstufen A1 bis Am und B entsprechenden Konzentrationsstufen X1 bis Xm und Y befinden sich logische ODER-Schaltungen der in dem genannten Bild 9 der Nachrichtentechnischen Zeitschrift dargetellten oder ähnlicher Art, wobei wesentlich ist, daß bei einem taktgleichen Zusammentreffen von Binärzeichen unterschiedlicher Art immer das Binärzeichen der ersten Art in der oben angegebenen Weise dominiert. Die Verwendung dieser logischen ODER-Schaltungen schafft also die Möglichkeit, daß im Falle gleichzeitig, jedoch voneinander unabhängig gestarteter Aussendung zweier Informationen von zwei verschiedenen Sendern bei Ungleichheit zwischen zwei gleichzeitig zur Aussendung kommenden Bits sich immer das Zeichen der einen Art von den zwei möglichen Arten von Binärzeichen gegenüber dem Zeichen der anderen Art elektrotechnisch durchsetzt.

Zur Verhinderung eines gleichzeitigen Starts zweier Informations-Sendevorgänge seitens zweier verschiedener Sender, zum Beispiel K1 und Kn, gibt jeder von ihnen zuerst immer am Anfang eines Sendevorganges als Information seine eigene binärcodierte Adresse ab. Die Sender K1 bis Kn haben also binärcodierte Adressen, die sich sämtlich voneinander unterscheiden und jedem der Sender einzeln zugeordnet sind. Übertragen nun zwei zufällig gleichzeitig startende Sender ihre binärcodierten Adressen, so gelangen diese unter anderem über den Prüfkanal Z an sie selbst zurück. Beide binärcodierten Adressen treffen spätestens auf dem Prüfkanal Z aufeinander, das heißt sie fließen hier zusammen, und zwar bitweise, das heißt Binärzeichen für Binärzeichen jeweils von jedem der beiden Sender. Was über den Prüfkanal letztendlich zu den Sendern zurück fließt, ist eine Mischung beider Adressen-Informationen nach Maßgabe der bereits angegebenen Regel, das im Falle gleichzeitig, jedoch voneinander unabhängig gestarteter Aussendung zweier Adressen-Informationen von zwei verschiedenen Sendern bei Ungleichheit zwischen zwei gleichzeitig zur Aussendung kommenden Bits sich immer das Binärzeichen der einen (ersten) Art von den zwei möglichen Arten von Binärzeichen gegenüber dem Binärzeichen der anderen (zweiten) Art durchsetzt.

Jede Adressen-Information besteht nun in bekannter Weise aus einer Mehrzahl von aufeinander folgend vom jeweiligen Sender abgegebenen Binärzeichen. Solange nun die Binärzeichen zweier senderindividueller und taktsynchron mit gleichzeitigem Start abgegebener Adressen-Informationen gleich sind, kann die Gleichzeitigkeit zweier Sendevorgänge noch von keinem der beteiligten Sender, das heißt ihren Vergleichern, erkannt werden. Solange kann aber auch die über den gemeinsamen Sendekanal C übertragene Adressen-Information noch nicht verfälscht sein. Sobald aber bei einem der aufeinander folgend zur Aussendung kommenden Bits der binärcodierten Adressen-Informationen eine Zeichen-Ungleichheit vorliegt, wird dies von einem der beiden Sender mit Hilfe seines Vergleichers sofort erkannt.

Es sei nun angenommen, daß in einem bestimmten Zeitpunkt vom Sender Kn das Binärzeichen der ersten Art abgegeben wird, dagegen von dem Sender K1 im selben Augenblick ein Binärzeichen der anderen Art. In dieser Betriebssituation kommt das Binärzeichen der ersten Art, welches also vom Sender Kn in diesem Moment abgegeben wird, über den Prüfkanal Z zurück zu allen Sendern, das heißt also auch zurück zum Sender K1. Dieser jedoch gibt in diesem Moment das Binärzeichen der anderen Art ab. Sein Vergleicher V registriert deshalb Zeichenungleichheit zwischen dem von ihm selbst zur Zeit abgegebenen Binärzeichen einerseits und dem über den Prüfkanal Z zurückerhaltenen Binärzeichen. Aufgrund Feststellung dieser Zeichen-Ungleichheit ist der Sender K1 durch seinen mit einer nicht im einzelnen dargestellten, den Vergleich durchführenden logischen Schaltung (zum Beispiel sind die Vergleichereingänge v1 und v2 mit den beiden Eingängen eines ebenfalls taktgesteuerten Koinzidenzgatters und dessen Ausgang mit dem Vergleicherausgang v3 verbunden) ausgestatteten Vergleicher V veranlaßt, seinen Sendevorgang sofort abzubrechen.

Durch die zuvor beschriebene Arbeitsweise wird bewirkt, daß eine Zeichenverfälschung hinsichtlich der über den Sendekanal übertragenen Binärzeichen nicht eintritt. Der Sender K1 bricht also seinen Sendevorgang ab, weil das in der betrachteten Betriebssituation zurückerhaltene Zeichen das der einen Art ist, dagegen das von ihm selbst ausgesendete Zeichen das der anderen Art ist. Die beiden Sender führen also dem Sendekanal einerseits und dem Prüfkanal andererseits ihre beiden Adressen-Informationen zu und erhalten die über den Prüfkanal übertragenen Binärzeichen zurück und verwenden sie für den beschriebenen Vergleich. Bei Auftreten der Ungleichheit bricht derjenige Sender, der diese Ungleichheit mit Hilfe seines Vergleichers erkennt, seinen Sendevorgang, das heißt die Übertragung der Binärzeichen der Adressen-Information zum gemeinsamen Sendekanal sowie zum Prüfkanal Z sofort ab.

Zwischen den Sendern Kl bis Kn einerseits und dem Sendekanal S andererseits liegen in zwei Konzentrationsstufen Einrichtungen A1-Am und B. Diese enthalten pulstaktgesteuerte Umsetzer, die einer Erneuerung der Binärzeichen bei deren Zusammenführung auf den Sendekanal dienen. Zusätzlich zum Sendekanal ist der Prüfkanal Z vorgesehen, dem die Sender ihre Binärzeichen außerdem und unter Umgehung der Umsetzer zuführen. Die Binärzeichen fließen von zufällig gleichzeitig Sendevorgänge startenden Sendern auf ihrem Weg zum Prüfkanal zusammen. Solohe Binärzeichen werden dabei aber so zwischen jeweils zwei Taktimpulsen ausgesendet sowie auf den Prüfkanal zusammengeführt und von diesen dann zu den Sendern wieder zurückgeführt, daß ein gegebenenfalls erforderlich werdender Abbruf des Sendevorganges mit Sicherheit noch innerhalb des Zeitintervalls zwischen diesen beiden Taktimpulsen stattfindet.

Das Prinzip der Durchsetzung eines Binärzeichens der einen Art gegenüber einem pulstaktmäßig gleichzeitigen Binärzeichen der anderen Art ist - wie bereits erläutert wurde -auf den Prüfkanal beschränkt, wohingegen die Aussendung sowohl der Binärzeichen der einen Art, als auch der Binärzeichen der anderen Art auf den Sendekanal relativ niederohmig erfolgt.

Um eine Zeichenverfälschung bezüglich der über den Sendekanal C tatsächlich zur Aussendung kommenden Binärzeichen von zu übertragenden Informationen mit Sicherheit zu verhindern, ist es ja notwendig, daß im Fall gleicheitig, jedoch voneinander unabhängig gestarteter Aussendung zweier Adressen-Informationen von zwei verschiedenen Sendern bei Ungleichheit zwischen zwei gleichzeitig von den betreffenden Sendern abgegebenen Binärzeichen der Sendevorgang desjenigen Senders, der in dieser Betriebssituation gerade das Binärzeichen der zweiten Art abgibt, schnellstens abgebrochen wird, und zwar noch vor Beginn des nächsten Zeittaktes, also des nächsten abzugebenden Binärzeichens. Laufzeitprobleme können sich dabei daraus ergeben, daß für die Weiterleitung eines von einem Sender, zum Beispiel Kl abgegebenen Binärzeichens über die Konzentrationsstufen Xl und Y sowie über den gemeinsamen Prüfkanal Z und über den Signalweg d und e Zeit verbraucht wird, wobei dieser Zeitverbrauch in Relation zur gegebenen Taktfrequenz steht, das heißt in Relation letztlich zur Dauer eines jeden von einem Sender abgegebenen Binärzeichens. Dieser Zeitbedarf ist bedingt -wie weiter oben bereits genauer erläutert wurde - durch die die Zeichendurchsetzung eines Binärzeichens der einen Art gegenüber Binärzeichen der anderen Art ermöglichende Verwendung der zum Beispiel durch die genannte NTZ-Litieraturstelle bekannten Gatterschaltungen in den Konzentrationsstufen Xl bis Xm und Y des Prüfkanals Z. - Im Falle der beschriebenen gleichzeitig, jedoch voneinander unabhängig gestarteten Abgabe zweier Adressen-Informationen von zwei verschiedenen Sendern muß bei Auftreten der Ungleichmäßigkeit zwischen den beiden jeweils gleichzeitig von ihnen abgegebenen Binärzeichen sowohl diese Ungleichheit erkannt werden mit Hilfe des jeweiligen Vergleichers V, als auch die Angabe weiterer Binärzeichen, d. h. also bereits des unmittelbar nächstfolgenden Binärzeichens, zum gemeinsamen Sendekanal C hin von dem betreffenden Sender, z. B. Kl, unterbunden werden. Dies geschieht mit Hilfe einer Sperreinrichtung Pl, die dem Sender Kl zugeordnet ist. Jedem der Sender ist also eine solche Sperreinrichtung zugeordnet.

Das beim Prüfkanal realisierte Prinzip der Durchsetzung eines Binärzeichens der einen Art gegenüber einem gleichzeitigen Binärzeichen der anderen Art läßt sich besonders einfach und deshalb vorteilhaft mit logischen ODER-Schaltungen realisieren, wie sie in dem genannten Bild 9 aus der Nachrichtentechnischen Zeitschrift dargestellt sind. Mit diesem Prinzip sind aber auch zugleich die bereits erwähnten Laufzeitzusammenhänge ursächlich verbunden. Es ist nun vorgesehen,daß das Prinzip der Durchsetzung eines Binärzeichens der einen Art gegenüber einem gleichzeitigen Binärzeichen der anderen Art beschränkt ist auf den Prüfkanal einschließlich des ihm zugeordneten Netzes von Zuführungswegen, die durch und über die Konzentrationsstufen X1 bis Xm und Y führen. Dagegen sind in den Konzentrationsstufen A1 bis Am und B, über die also die tatsächliche Aussendung der Binärzeichen von von den Sendern abzugebenden Informationen stattfindet, andere logische ODER-Schaltungen verwendet, und zwar solche, über die sowohl die Binärzeichen der einen Art, als auch die Binärzeichen der anderen Art auf den Sendekanal C relativ niederohmig weitergeleitet und zur Aussendung gebracht werden. Die Weiterleitung dieser Binärzeichen beiderlei Art von einem Sender über die Konzentrationsstufen A1 bis Am und B sowie die Aussendung dieser Binärzeichen über den gemeinsamen Sendekanal C erfolgt deshalb relativ verzögerungsarm und verzerrungsarm, weswegen eine relativ hohe Übertragungsqualität erzielt wird. Demgegenüber erfährt die Übertragung der gleichen Binärzeichen über die Konzentrationsstufen X1 bis Xm und Y und über den Prüfkanal Z wegen des hier zur Anwendung gebrachten, erläuterten Durchsetzungsprinzips vergleichsweise eine gewisse Verzögerung.

Zur Eliminierung von in diesem Zusammenhang möglichen Zeitproblemen bezüglich eines noch rechtzeitigen Abbruches eines Adressen-Informations-Sendevorganges seitens eines Senders kann jedem Sender, zum Beispiel K1, je eine Verzögerungseinrichtung, zum Beispiel L1, zugeordnet werden, mit deren Hilfe sich die Aussendung von Binärzeichen über den gemeinsamen Sendekanal C verzögern läßt. Ebenso aber kann auch für mehrere oder alle Sender eine gemeinsame Verzögerungseinrichtung vorgesehen sein. Diese Verzögerung möge um wenigstens einen Takt erfolgen und ist für sämtliche Verzögerungseinrichtungen der verschiedenen Sender gleich groß. Dadurch wird erreicht, daß durch diese Verzögerung der Aussendung von Adressen-Informations-Binärzeichen um wenigstens einen Takt eine bei gleichzeitigem Start zweier Sendevorgänge und bei Auftreten von Zeichen-Ungleichheit in der oben im einzelnen beschriebenen Weise die Sender gefährdende Überlastung dabei sowie eine Bitverfälschung dabei vermieden wird, wozu es erforderlich ist, daß einer der betreffenden beiden Sender rechtzeitig gestoppt wird. Dadurch wird vehindert, daß die betreffenden Sender überlastet werden können, wenn die von ihnen abgegebenen Binärzeichen ungleichen Wertes sind. Der Aussendung solcher ungleichen Binärzeichen kommt also das Abbrechen der Übertragung der Binärzeichen seitens eines der beiden Sender zum Sendekanal zuvor, wodurch eine solche Überlastung verhindert wird. Das Problem der Überlastung kann die Sender und/oder die ihnen zugeordnete Sperreinrichtung, zum Beispiel P1 betreffen, also den Ausgang derjenigen senderindividuellen Einrichtung, von der die Binärzeichen zur Konzentrationsstufe A1 bis Am hin abgegeben werden.

**Patentansprüche**

1. Schaltungsanordnung für PCM-Fernmeldeanlagen, insbesondere PCM-Fernsprechvermittlungsanlagen mit mehreren synchron pulstaktgesteuerten Sendern (K1-Kn) welche Informationen, die Adressen und Daten bilden und die aus einer Folge von Binärzeichen bestehen, abzugeben vermögen und
in der die von den Sendern jeweils abgegebenen Daten über pulstaktgesteuerte Umsetzer, die einer Erneuerung der Binärzeichen dienen, zusammengeführt und auf einem allen Sendern gemeinsamen Sendekanal (C) niederohmig ausgesendet werden und in der die von den Sendern jeweils abgegebene Adresse auf dem Weg zu einem allen Sendern gemeinsamen Prüfkanal (Z) zusammenfließen, wobei die Schaltungsanordnung derart ausgebildet ist, daß, zur Unterbindung zweier oder mehrerer gleichzeitiger Sendevorgänge nach gleichzeitigen Starts zweier oder mehrerer verschiedener Sender,

a) jeder Sender zu Beginn eines jeden Sendevorganges seine eigene binärcodierte senderindividuelle Adresse abgibt,

b) von zwei oder mehreren Sendern gleichzeitig abgegebene Adressen auf dem Prüfkanal bitweise zusammenfließen,

c) bei Ungleichheit von von zwei oder mehr Sendern zeitlagegleich abgegebenen und auf dem Prüfkanal zusammenfließenden Binärzeichen sich immer das Zeichen der einen Art von den zwei möglichen Arten von Binärzeichen gegenüber den Zeichen der anderen Art durchsetzt,

d) die zusammenfließenden Binärzeichen wieder den Sendern zugeführt werden

e) jeder Sender die von ihm momentan abgegebene Information mit der momentan zürückerhaltenen Information bitweise vergleicht und

f) jeder Sender dabei in dem Falle, daß das jeweils momentan zürückerhaltene Zeichen eines der einen Art, dagegen das von ihm selbst zeitlage-gleich abgegebene Zeichen das der anderen Art ist, seinen Sendevorgang abbricht und daß

die Aussendung der von einem jeweiligen Sender abzugebenden Daten auf den Sendekanal erst nach Durchsetzung der zugehörigen Adresse des betreffenden Senders auf dem Prüfkanal erfolgt,

**dadurch gekennzeichnet,**

daß im gemeinsamen Sendekanal Binärzeichen die sowohl Daten als auch Adressen darstellen niederohmig zusammengeführt werden und daß die von den Sendern abgegebenen Binärzeichen zwischen jeweils zwei Taktimpulsen auf dem Prüfkanal nach dem Durchsetzungsprinzip zusammengeführt und von diesem dann wieder zu den Sendern zugeführt werden und daß die Aussendung von Binärzeichen auf den Sendekanal um eine senderindividuelle Verzögerung von wenigstens einem Takt erfolgt, so daß bei pulstaktmäßig gleichzeitigem Start zweier Adressen-Sendevorgänge und bei Auftreten von Zeichenungleichheit eine die Sender gefährdende Belastung sowie eine Bitverfälschung mittels eines der Aussendung dieser ungleichen Zeichen zuvorkommenden ebenfalls senderindividuellen Abbrechens der Übertragung zum Sendekanal verhindert ist.

2. Schaltungsanordnung nach Anspruch 1, **dadurch gekennzeichnet,** daß der Vergleicher durch eine takgesteuerte Koinzidenzschaltung realisiert ist.

3. Schaltungsanordnung nach Anspruch 1, **dadurch gekennzeichnet,** daß die Binärsignale von Sendern zum gemeinsamen Signalkanal übertragen werden.

## Claims

1. Circuit arrangement for PCM telecommunication installations, preferably PCM telephone exchanges with a plurality of synchronous clock-controlled transmitters (K1 to Kn), which are capable of transmitting items of information which form addresses and data and which consist of a sequence of binary characters, and in which circuit arrangement the data transmitted in each case by the transmitters are combined via clock-controlled convertors, which are used to regenerate the binary characters, and are transmitted in a low-impedance manner on a transmission channel (C) which is common to all transmitters and in which circuit arrangement the addresses transmitted in each case by the transmitters converge on the path to a test channel (Z), which is common to all transmitters, the circuit arrangement being designed in such a manner that to prevent two or more simultaneous transmission processes after two or more different transmitters have been started simultaneously,

a) each transmitter transmits its own binary-coded transmitter-specific address at the start of each transmission process,

b) addresses transmitted simultaneously by two or more transmitters converge bit-by-bit on the test channel,

c) in the case of inequality of binary characters transmitted by two or more transmitters at the same point in time and converging on the test channel, the character of one type of the two possible types of binary character always takes priority over the characters of the other type,

d) the converging binary characters are fed back to the transmitters again

e) each transmitter compares the information currently being transmitted by it with the information currently being received back, bit-by-bit, and

f) in the case where the character currently being received back in each case is of one type, while the character transmitted by it at the same point in time is of the other type, each transmitter terminates its transmission process, and in that

the transmission of the data to be transmitted by a respective transmitter on the transmission channel is not carried out until the associated address of the relevant transmitter has taken priority on the test channel, characterised in that, binary characters which represent both data as well as addresses are combined in a low-impedance manner, in the common transmission channel and in that the binary characters transmitted by the transmitters are combined according to the principle of priority-taking on the test channel, in each case between two clock pulses, and are then fed back from the test channel to the transmitters again, and in that the transmission of binary characters on the transmission channel is carried out with a transmitter-specific delay of at least one clock cycle, such that if two address-transmission processes start in a simultaneous clock cycle and inequality of characters occurs, a load which could endanger the transmitter and a bit corruption are prevented by terminating the transmission to the transmission channel in a manner that is also transmitter-specific and which forestalls the transmission of these unequal characters.

2. Circuit arrangement according to Claim 1, characterised in that the comparator is implemented by means of a clock-controlled coincidence circuit.

3. Circuit arrangement according to Claim 1, characterised in that the binary signals are transmitted from transmitters to the common signal channel.

## Revendications

1. Montage pour des installations de télécommunications MIC, notamment des installations de commutation téléphonique MIC,

comportant plusieurs émetteurs (K1-Kn) commandés de façon cadencée par des impulsions et pouvant délivrer des informations qui constituent des adresses et des données et sont formées par une suite de signaux binaires, et

dans lequel les données délivrées respectivement par les émetteurs sont rassemblées par des convertisseurs qui sont commandés de façon cadencée par des impulsions et sont utilisés pour régénérer les signaux binaires, et sont émises, avec une faible valeur ohmique, dans un canal d'émission (C) commun à tous les émetteurs, et

dans lequel les adresses délivrées respectivement par les émetteurs sont réunies dans le trajet aboutissant à un canal de contrôle (Z) commun à tous les émetteurs, le montage étant agencé de telle sorte que, pour supprimer deux ou plusieurs opérations simultanées d'émission après des démarrages simultanés de deux ou de plusieurs émetteurs différents,

a) chaque émetteur envoie, au début de chaque processus d'émission, son adresse particulière codée en binaire et prévue pour cet émetteur,

b) des adresses délivrées simultanément par deux ou plusieurs émetteurs circulent conjointement, bit par bit, dans le canal de contrôle,

c) en cas d'inégalités de signaux binaires délivrés dans les mêmes positions temporelles par deux ou plusieurs émetteurs et réunis dans le canal de contrôle, le signal présentant l'un des deux types possibles de signaux binaires s'impose toujours par rapport au signal de l'autre type,

d) les signaux binaires réunis sont à nouveau envoyés aux émetteurs,

e) chaque émetteur compare bit par bit l'information qu'il délivre momentanément, à l'information récupérée momentanément, et

f) dans le cas où le signal respectivement récupéré momentanément est d'un premier type alors que le signal délivré par un même émetteur possède l'autre type, cet émetteur interrompt son opération d'émission, et

que l'émission des données devant être délivrées par un émetteur respectif, dans le canal d'émission s'effectue uniquement après le passage de l'adresse associée de l'émetteur considéré dans le canal de contrôle, caractérisé par le fait

que, dans le canal commun d'émission, des signaux binaires, qui représentent aussi bien des données que des adresses, sont réunis avec une faible valeur ohmique et que les signaux binaires délivrés par les émetteurs sont réunis entre respectivement deux impulsions de cadence, dans le canal de contrôle selon le principe prioritaire, et sont à nouveau envoyés par ce canal aux émetteurs, et que l'émission des signaux binaires dans le canal s'effectue avec un retard, prévu individuellement pour l'émetteur, égal à au moins une cadence de sorte que, dans le cas d'un démarrage simultané conformément à la cadence des impulsions, de deux opérations d'émission d'adresses et lors de l'apparition d'une inégalité entre les signaux, une charge mettant en danger les émetteurs ainsi qu'une altération des bits sont empêchées au moyen d'une interruption, qui est également prévue individuellement pour l'émetteur et empêche l'émission de ce signal différent, de la transmission en direction du canal d'émission.

2. Montage suivant la revendication 1, caractérisé par le fait que le comparateur est constitué par un circuit à coïncidence commandé de façon cadencée.

3. Circuit suivant la revendication 1, caractérisé par le fait que les signaux binaires sont transmis par des émetteurs au canal commun de transmission de signaux.